# EUROPEAN PATENT APPLICATION

(11) **EP 1 136 973 A1**
(43) Date of publication of application: **26.09.2001**
(21) Application number: 00956970.8
(22) Date of filing: 06.09.2000
(51) Int. Cl.: G09F 9/00, G02B 1/10, H04M 1/02, G02F 1/1335, C03C 17/30

(54) **COVER GLASS**

(30) Priority: 06.09.1999 JP 25219999; 31.01.2000 JP 2000022891
(71) Applicant: SEIKO EPSON CORPORATION, Shinjuku-ku, Tokyo 163-0811 (JP)
(72) Inventor: YANO, Kunihiko, Seiko Epson Corporation, Suwa-shi, Nagano 392-8502 (JP)
(74) Representative: Melzer, Wolfgang, Dipl.-Ing.
(86) International application number: JP0006059
(87) International publication number: WO0118773

(57) **Abstract**

A cover glass composed of a cover glass substrate 2 and an anti-reflection coating 4 and 5 formed on the outer surface thereof or preferably on both the outer surface and the inner surface thereof. A hard coating film 3 is interposed between the cover glass substrate 2 and the anti-reflection coating 4. The anti-reflection coating may be a preformed film having an anti-reflection coating 7. The cover glass reduces the reflection of external light, increases the light transmittance, and improves the visibility of the display unit mounted in a portable apparatus.

## Description

### Technical Field

The present invention relates to a cover glass to be fixed to the window of a housing of a portable apparatus which makes visible the inside of the housing therethrough.

### Background art

A portable apparatus such as cellular phone usually has a liquid crystal display sealed with a thin pane of inorganic glass. For protection from external forces and shocks at time of use, the liquid crystal display is recessed in the housing and closed by a cover glass through which the display is visible.

The cover glass is injection-molded from a transparent resin such as acrylic resin and polycarbonate resin which are light in weight, easy to fabricate, and superior in impact resistance. Its outer surface is usually given hard coating for scratch resistance.

The liquid crystal display with a cover glass is visible only through the cover glass. Therefore, the optical performance of the cover glass greatly affects the visibility of the display. Unfortunately, conventional cover glass does not make the liquid crystal display completely visible because of its poor optical performance. In other words, the cover glass reflects external light (indoor or outdoor) making the display hard to see. The display unit mounted on portable apparatus is mostly of reflection type for battery power saving. The one with back light becomes dark within a short time. In order to make itself visible, the liquid crystal display of reflection type utilizes external light incident on its surface.

Cover glass has the other disadvantage of decreasing the light transmittance and deteriorating the reading of the liquid crystal display of reflection type. Decrease in light transmittance by cover glass poses a serious problem for the recent color display provided with color filters which absorb light.

The present invention was completed to address the above-mentioned problems. It is an object of the present invention to provide a cover glass which reduces the reflection of external light and increases the light transmittance, thereby making the display unit of portable apparatus visible more easily.

### Disclosure of the Invention

The present invention is directed to a cover glass having an anti-reflection coating on at least the outside or preferably on both sides of a transparent cover glass substrate. Owing to the anti-reflection coating which remarkably reduces reflection of external light, the cover glass increases the light transmittance and greatly improves the visibility of the display unit mounted in portable apparatus. In other words, the anti-reflection coating attached to the outside of the cover glass prevents external light from being reflected by the outside of the cover glass, and this contributes to the improved visibility of the display unit. The anti-reflection coating attached to the inside, not only to the outside, of the cover glass also improves the visibility of the display unit because it prevents the inside of the cover glass from reflecting the external light reflected by the display unit. Without anti-reflection coating, external light is reflected twice as it passes through the cover glass inward and outward. Reflection by both sides and resulting decrease in light transmittance are inevitable because there is a gap (air layer) between the cover glass and the display unit. External light incident on the cover glass passes through the cover glass and reaches the display unit, and after reflection by the display unit it passes the cover glass again and reaches the eye.

The cover glass can be produced at a low cost by using inexpensive preformed film having an anti-reflection coating in place of deposited anti-reflection coating.

In the case where the anti-reflection coating is formed by vapor deposition, a hard coating film is interposed between the cover glass substrate and the anti-reflection coating for improvement in adhesion between them and also for protection of the cover glass from scratches.

The hard coating film is necessary only on the outside of the cover glass in the case where the anti-reflection coating is attached to both sides of the cover glass, because strong adhesion is not required between the inside of the cover glass and the anti-reflection coating.

In the case of a cover glass having a flat inside surface and a curved outside surface, they should preferably be provided with a preformed film having an anti-reflection coating and a deposited anti-reflection coating, respectively, because a preformed film having an anti-reflection coating is comparatively rigid and hard to attach to a curved surface.

The hard coating film may be formed economically by hot stamping which transfers an organic thin film from a transfer foil.

For good adhesion to the anti-reflection coating, it is desirable to use a hard coating film made of a coating composition incorporated with metal oxide fine particles.

The preformed film having an anti-reflection coating may be provided with decorations. This saves production steps and cost which would be necessary when the cover glass is decorated separately.

In the case where the cover glass is provided with a hard coating film, it is desirable to interpose a primer layer between the hard coating film and the cover glass substrate so as to improve the shock resistance of the cover glass.

In addition, the anti-reflection coating may be given water- and oil-repellent treatment which not only improves its durability but also facilitates its surface cleaning. This is desirable for the cover glass of portable apparatus which is easily stained by hands.

### Brief Description of the Figures

Fig. 1 is a front view of one example of cellular phone provided with a cover glass.

Fig. 2 is an enlarged sectional view of the cover glass taken along the line A-A' in Fig. 1.

Fig. 3 is a sectional view showing the structure of the cover glass in the first embodiment of the present invention.

Figs. 4(a) and 4(b) are sectional views showing respectively the structure of the cover glass in the second and third embodiments of the present invention.

Figs. 5(a) and 5(b) are sectional views showing respectively the structure of the cover glass in the fourth embodiment (with preformed film having an anti-reflection coating on the inside) and in the fifth embodiment (with preformed film having an anti-reflection coating on both sides) of the present invention.

Fig. 6(a) is a plan view showing the preformed film having an anti-reflection coating and decorations, and Fig. 6(b) is a sectional view taken long the line B-B' in Fig. 6(a).

### Best Mode for Carrying out the Invention

In what follows, the invention will be described in more detail with reference to embodiments which are not intended to restrict the scope thereof.

The cover glass of the present invention is so designed as to be fixed to the window of the housing of portable apparatus so that it makes visible the inside of the housing. The typical use of the cover glass is to cover the display unit of the portable apparatus for its protection from external objects while keeping it visible from outside. Other uses of the cover glass include the inspection hole of portable apparatus.

The cover glass of the present invention may be used for protection of the display unit mounted on portable apparatus such as cellular phone, portable game machine, digital camera, portable wireless communication equipment, portable radio, wrist watch, and portable audio equipment. Typical examples of the display unit include liquid crystal display units. The cover glass of the present invention produces its full effect when applied to liquid crystal display units of reflection type which utilize external light.

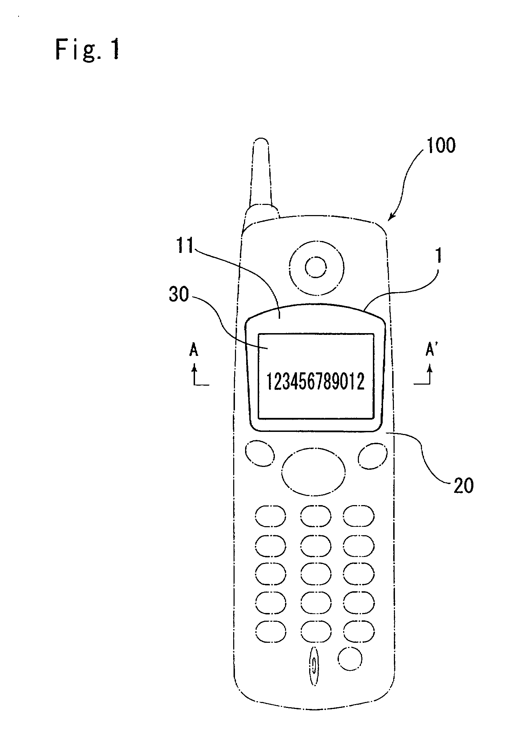

Fig. 1 shows one example of the cover glass 1 used to protect the liquid crystal display 30 mounted in the housing 20 of the cellular phone 100. The periphery of the cover glass 1 usually has an opaque decoration 11 formed by plating or printing.

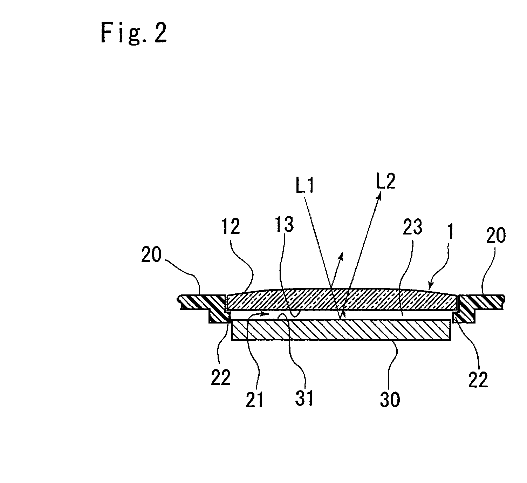

Fig. 2 is a partly enlarged sectional view taken along the line A-A' in Fig. 1. There is shown the cover glass 1 which protects the liquid crystal display 30 of the portable apparatus 100. The housing 20 of the portable apparatus has a recess in which the liquid crystal display 30 is mounted, and the recess has a window 21 through which the view plane 31 of the liquid crystal display 30 can be seen from outside. The cover glass 1 closes this window 21, with its edges fixed to the frame 22 projecting from the window 21. There is a gap 23 between the view plane 31 of the liquid crystal display 30 and the inside of the cover glass 1, so that the cover glass 1 will not come into direct contact with the view plane 31 of the liquid crystal display 30 when it is bent inward by external force.

External light L1 which is incident on the cover glass 1 passes through the cover glass 1 and reaches the liquid crystal display 30. Then, it is reflected by the liquid crystal display 30, and as the reflected light L2, it passes through the cover glass and reaches the eye. Thus, one can see the view plane 31 of the liquid crystal display 30. In this process, the external light L1 is partly reflected by the outer surface 12 of the cover glass 1 and the reflected light from the liquid crystal display 30 is also partly reflected by the inner surface 13 of the cover glass 1.

From the fact that there exists a gap (air layer) 23 between the cover glass 1 and the liquid crystal display 30, it follows that the external light L1 passes through the cover glass 1 twice and is reflected by the cover glass twice before it reaches the eye. Therefore, the optical performance of the cover glass 1 greatly affects the visibility of the liquid crystal display 3.

The outer surface 12 of the cover glass 1 is usually curved so that it matches the outer surface of the housing 20 for the purpose of design. On the other hand, the inner surface 13 of the cover glass 1 is flat or slightly concave because it is placed near the view plane 31.

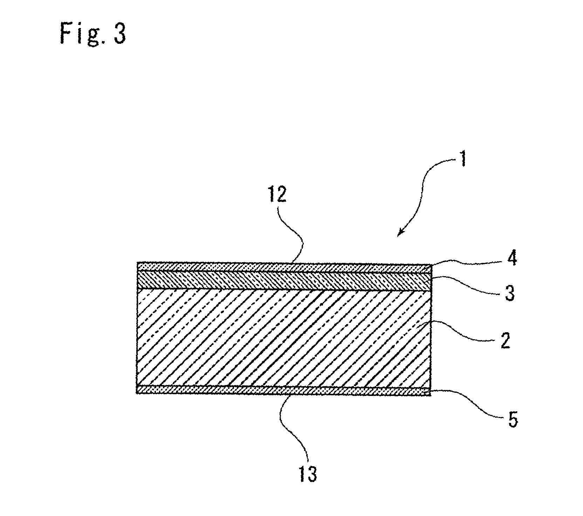

Fig. 3 shows the cross section of the cover glass according to the first embodiment of the present invention. This cover glass 1 has a hard coating film 3 attached to the outer surface of the cover glass substrate 2 (which has previously been formed in conformity with the shape of the cover glass 1). The hard coating film 3 has an anti-reflection coating 4 formed on the outer surface thereof. On the other hand, the cover glass substrate 2 also has another anti-reflection coating 5 formed directly on the inner surface thereof.

The cover glass substrate 2 is made of transparent resin or inorganic glass. Typical examples of the former include such thermoplastic resins as polymethyl metacrylate resin, polycarbonate resin, and polyolefin resins (such as polyethylene and polypropylene), which are light in weight and superior in impact resistance. The cover glass substrate 2 is usually made by injection molding; however, it may also be cut out of a thin plate.

To protect the cover glass substrate 2 itself and the view plane 31, a UV light absorber is incorporated into the raw material resin of the cover glass substrate 2 or applied (in aqueous or organic solution form) to the surface of the cover glass substrate 2.

The UV light absorber includes those which are derived from cyanoacrylate, salicylic acid, benzophenone, and benzotriazole. The one derived from cyanoacrylate is exemplified by ethyl-2-cyano-3,3-diphenyl acrylate. The one derived from salicylic acid is exemplified by phenyl salicylate, 4-tert-butylphenyl salicylate, and p-octylphenyl salicylate. The one derived from benzophenone is exemplified by 2,4-dihydroxybenzophenone, 2-hydroxy-4-methoxybenzophenon, 2-hydroxy-4-octoxybenzophenone, 2,2'-dihydroxy-4-methoxybenzophenone, and 2,2'-dihydroxy-4,4'-dimethoxybenzophenone. The one derived from benzotriazole is exemplified by 2-(2-hydroxy-5-methylphenyl)-2H-benzotriazole, 2-(2-hydroxy-5-tert-butylphenyl)benzotriazole, 2-(2-hydroxy-3,5-di-tert-butylphenyl)benzotriazole, 2-(2-hydroxy-3,5-di-tert-aminophenyl)benzotriazole, 5-chloro-2-(3,5-di-tert-butyl-2-hydroxyphenyl)-2H-benzotriazole, 2-(3-tert-butyl-2-hydroxy-5-methylphenyl)-5-chloro-2H-benzotriazole, 2-(3,5-di-tert-pentyl-2-hydroxyphenyl)-2H-benzotriazole, 2-(3,5-di-tert-butyl-2-hydroxyphenyl)-2H-benzotriazole, and 2-(2-hydroxy-5-tert-octylphenyl)-2H-benzotriazole.

Of the above-mentioned UV light absorbers, the one derived from benzotriazole is preferable because of its good resin compatibility, high UV absorbing capacity, and light color or colorlessness (with no possibility of staining the cover glass).

The UV absorber should be incorporated into the resin in an amount of 0.5-5 pbw, preferably 1-3 pbw, for 100 pbw of the resin. An excess amount of UV absorber does not dissolve in the resin completely but separates out from the resin at the time of molding.

The hard coating film 3 is interposed between the outer surface of the cover glass substrate 2 and the outer anti-reflection coating 4. It protects the cover glass substrate 2 from scratches and improves adhesion between the cover glass substrate 2 and the anti-reflection coating 4. Usually, it is not interposed between the inner surface of the cover glass substrate 2 and the inner anti-reflection coating 5, because strong adhesion between them is not required. However, this does not always hold true. The hard coating film 3 may be omitted if good adhesion between the cover glass substrate 2 and the anti-reflection coating 4 is ensured, as in the case where the cover glass substrate 2 is made of inorganic glass.

The hard coating film 3 is usually formed by coating the surface of the cover glass substrate 2 with a curable compound and then curing the coated film. A preferred compound for the cover glass substrate 2 made of thermoplastic resin is one which is cured by irradiation with UV light, electron beams, or the like rather than heating. Examples of such a compound include a photocurable silicone compound and an acrylic- based UV-curable monomer compound. The former is composed mainly of a silicone compound (which gives rise to silanol groups upon irradiation with UV light) and an organopolysiloxane (which has halogen atoms or reactive groups such as amino groups for condensation reaction with silanol groups). The latter is commercially available under a trade name of UK-6074 from Mitsubishi Rayon Co., Ltd.

A curable composition of thermosetting type can also be used. It is exemplified by a thermosetting composition composed mainly of silane compound or silane coupling agent which has in one molecule polymerizable groups (such as vinyl group, allyl group, acryl group, epoxy group, and methacryl group) and hydrolyzable groups (such as alkoxyl group).

The silane compound as a constituent of the thermosetting composition includes, for example, vinyltrialkoxysilane, vinyltrichlorosilane, vinyltri(β-methoxy-ethoxy)silane, allyltrialkoxysilane, acryloxypropyltrialkoxysilane, methacryloxypropyltrialkoxysilane, methacryloxypropyldialkoxymethylsilane, γ-glycidoxypropyltrialkoxysilane, β-(3,4-epoxycyclohexyl)-ethyltrialkoxysilane, mercaptopropyltrialkoxysilane, *γ* -aminopropyltrialkoxysilane, and N-β-(aminoethyl)- γ-aminopropylmethyldialkoxysilane. These compounds may be used in combination with one another. Also, they may be used in combination with a disilane compound represented by the general formula below. 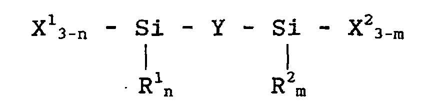 (where R¹ and R² each denotes a C₁₋₆ hydrocarbon group; X¹ and X² each denotes a hydrolyzable group; Y denotes an organic group containing a carbonate group or epoxy group; and m and n each is 0 or 1.)

These disilane compounds may be synthesized by any known process, such as the one which consists of performing addition reaction on diallyl carbonate and trichlorosilane and alkoxylating the reaction product. There is another process which consists of adding trichlorosilane to a compound having terminal substituents capable of addition and also having epoxy groups or epoxidizable functional groups on the main chain and subsequently alkoxylating the reaction product. The disilane compound should be hydrolyzed before use or acid-treated after it has formed a cured film.

The above-mentioned curable composition should preferably be incorporated with inorganic fine particles so that is has good adhesion to the anti-reflection coating 4 of inorganic material. Moreover, such inorganic fine particles cause the hard coating film 3 to have the same refractive index as that of the cover glass substrate 2 and the anti-reflection coating 4. This produces an effect of preventing interference fringes, thereby making the cover glass look good.

The inorganic fine particles may be exemplified by fine particles (1-100 mµm in particle diameter) of oxides of one or more than one kind of metal selected from Si, Sn, Sb, Ce, Zr, and Ti, and/or composite fine particles of oxides of more than one kind of metal selected from Si, Al, Sn, Sb, Ta, Ce, La, Fe, Zn, W, Zr, In, and Ti.

Typical examples of inorganic fine particles are SiO₂, SnO₂, Sb₂O₅, CeO₂, ZrO₂, and TiO₂, which are colloidally dispersed in water, alcohol, or any other organic solvent. Typical examples of composite fine particles are oxides of more than one kind of metal selected from Si, Al, Sn, Sb, Ta, Ce, La, Fe, Zn, W, Zr, In, and Ti, which are colloidally dispersed in water, alcohol, or any other organic solvent.

The inorganic fine particles may be surface-treated with an organosilicon compound or an amine compound so that they are stably dispersed in the curable composition.

Examples of the organosilicon compound include monofunctional silane, difunctional silane, trifunctional silane, and tetrafunctional silane. When used for surface treatment, the organosilicon compound has its hydrolyzable groups hydrolyzed or left unhydrolyzed. After treatment, the hydrolyzable groups should completely react with the -OH groups of the fine particles, although no problems with stability arise even though they partly remain unreacted.

Examples of the amine compound include ammonium, alkyl amines (such as ethylamine, triethylamine, isopropylamine, and n-propylamine), aralkylamine (such as benzylamine), alicyclicamine (such as piperidine), and alkanolamine (such as monoethanolamine and triethanolamine).

The organosilicon compound and amine compound should preferably be used in an amount of 1-15% of the amount of inorganic fine particles.

The amount of inorganic fine particles in the coating composition (as solids) should be 0-65 wt%, preferably less than 55 wt%. If this amount exceeds 65 wt%, the hard coating film becomes turbid and hence looks poor.

The thermosetting composition may be prepared by charging a reactor (having a stirrer) with the silane compound (having polymerizable groups and hydrolyzable groups) and the inorganic fine particles (dispersed in alcohol or any other organic solvent), and stirring them with hydrochloric acid for hydrolysis.

The curable composition may be incorporated with ordinary additives such as UV absorber, flow control agent, surface active agent, and antistatic agent.

The hard coating film may be formed by dipping, spin-coating, spraying, flow coating, and knife coating.

For improved adhesion, the cover glass substrate 2 should preferably undergo surface treatment with corona discharge etc. before coating.

The coated film is finally cured with heat, UV light, or electron beams to give the hard coating film 3.

The hard coating film 3 is formed not only by the coating process mentioned above but also by hot stamping explained below. Hot stamping is intended to transfer a decorative material to the cover glass substrate 2 with the aid of heat and pressure from a foil coated with the decorative material. There is a commercial foil with a decorative material of thermosetting material which forms an organic hard coating film upon irradiation with UV light. Hot stamping permits efficient production of hard coating film 3 and also permits transfer to a curved surface. Therefore, it makes it possible to form the hard coating film on the outer surface of the cover glass.

One method of hot stamping is inmolding transfer. This method consists of injection-molding the cover glass substrate 2 in a mold in which a transfer foil printed with decorative material is arranged before each molding cycle. The decorative material is transferred to the cover glass substrate 2 during injection-molding by heat and pressure of the injection-molding. This method is efficient because it permits molding and hot stamping simultaneously and eliminates the secondary step for hot stamping. Moreover, this method permits transfer to a curved surface. At the same time as molding, a curable coating film is transferred to the cover glass substrate 2 from the transfer foil. Upon curing the curable coating film with UV light or electron beams, there is obtained the organic hard coating film 3. The foregoing technology is exemplified by IMD method of Nippon Shashin Insatsu Co., Ltd.

The hard coating film 3 should have a thickness in the range of 0.05-30 µm. It will not exhibit its basic performance if it is excessively thin, and it will cause optical strains if it is excessively thick.

For improved adhesion to the anti-reflection coating 4, the hard coating film 3 should preferably be surface-treated with acid, alkali, UV light, highfrequency plasma in argon or oxygen, or ion-beam irradiation of argon, oxygen, or nitrogen.

Each of the anti-reflection coatings 4 and 5 consists of one or more layers of inorganic film or organic film. It may be of multi-layer structure consisting of both inorganic film and organic film. The outer anti-reflection coating 4 and the inner anti-reflection coating 5 may be of identical structure or different structure. For example, the former may be of multi-layer structure and the latter may be of single-layer structure.

The inorganic film may be formed from an inorganic material such as SiO₂, SiO, ZrO₂, TiO₂, TiO, Ti₂O₃, Ti₂O₅, Al₂O₃, Ta₂O₅, CeO₂, MgO, Y₂O₃, SnO₂, MgF₂, and WO₃. They may be used alone or in combination with one another. Of these raw materials, SiO₂, ZrO₂, TiO₂, and Ta₂O₅ are preferable because they are capable of vacuum deposition at low temperatures. The film of multi-layer structure should preferably have the outermost layer of SiO₂.

The inorganic film of multi-layer structure may be composed of four layers. The first (adjacent to the cover glass substrate 2) is a ZrO₂ layer, the second is a SiO₂ layer, the third is a ZrO₂ layer, and the fourth (uppermost layer) is a SiO₂ layer. The first and second layers should have a total optical thickness of λ/4, and the third and fourth layers should have an optical thickness of λ/4 individually. λ stands for a designed wavelength, which is usually 520 nm.

The inorganic film may be formed by vacuum deposition, ion plating, sputtering, CVD process, or deposition from a saturated solution by chemical reactions.

The organic film may be formed from, for example, FFP (tetrafluoroethylene-hexafluoropropylene copolymer), PTFE (polytetrafluoroethylene), or ETFE (ethylenetetrafluoroethylene copolymer). An adequate raw material should be selected in consideration of the refractive index of the cover glass substrate and hard coating film. The forming method includes vacuum deposition, spin coating, and dip coating, which are suitable for mass production.

It is also possible to form the hard coating film 3 and the anti-reflection coating 4 simultaneously by inmolding transfer. This process employs a transfer foil having a curable film which forms the hard coating film upon curing and the anti-reflection coating 4. Upon curing transferred the curable film, there is obtained the cover glass having the hard coating film 3 and the anti-reflection coating 4. Therefore, this process gives in a single process the cover glass on which are formed the anti-reflection coating 4 and the hard coating film 3 by transfer. With this process it is possible to form the cover glass substrate 2 and transfer the hard coating film 3 and the anti-reflection coating 4 simultaneously. This helps reduce the number of production steps.

At least the outer anti-reflection coating 4 should preferably be surface-treated with a water- and oil-repellent. This surface treatment imparts stain resistance, water and oil repellency to the surface of the anti-reflection coating 4. The result is an improvement in durability of the anti-reflection coating 4.

The water- and oil- repellent treatment may be accomplished by coating the surface of the anti-reflection coating with an organic compound which has in the molecule hydrophobic groups and reactive groups capable of condensation reaction with SiOH groups. Coating may be replaced by vacuum deposition. It is desirable that the anti-reflection coating 4 have the outermost layer of SiO₂.

An example of the organic compound having hydrophobic groups and reactive groups is a silane compound represented by Rfₐ-Si-X₄₋ₐ (where Rf denotes a polyfluoroalkyl group, a polyfluoroether group, or an organic group containing these groups; X denotes an alkoxyl group, halogen atom, or amino group; and a is an integer of 1 to 3.)

The opaque decoration 11 at the periphery of the cover glass may be formed on either the inner surface or the outer surface. It may be formed by plating, hot stamping, silkscreen printing, inmolding transfer, or the like.

The cover glass 1 (as the first embodiment) shown in Fig. 3 has the anti-reflection coating 4 and the anti-reflection coating 5 respectively on the outer surface and inner surface of the cover glass substrate 2. The anti-reflection coating 4 formed on the outer surface prevents the external light from being reflected by the surface 12 of the cover glass 1 and also increases the transmittance of external light, thereby suppressing flickering and improving the visibility of the display. The anti-reflection coating 5 formed on the inner surface permits the light reflected by the liquid crystal display to pass through almost completely, thereby apparently increasing the reflectivity of the liquid crystal display. This makes the liquid crystal display brighter and visible more easily. The cover glass has a light transmittance of about 92% if it has no anti-reflection coating; however, it increases in light transmittance to 98% or above if it is provided with the anti-reflection 4 and the anti-reflection 5 on both surfaces of the cover glass. Moreover, the hard coating film 3 interposed between the cover glass substrate 2 and the outer anti-reflection coating 4 improves the adhesion of the anti-reflection coating 4 and protects the cover glass 1 from scratches.

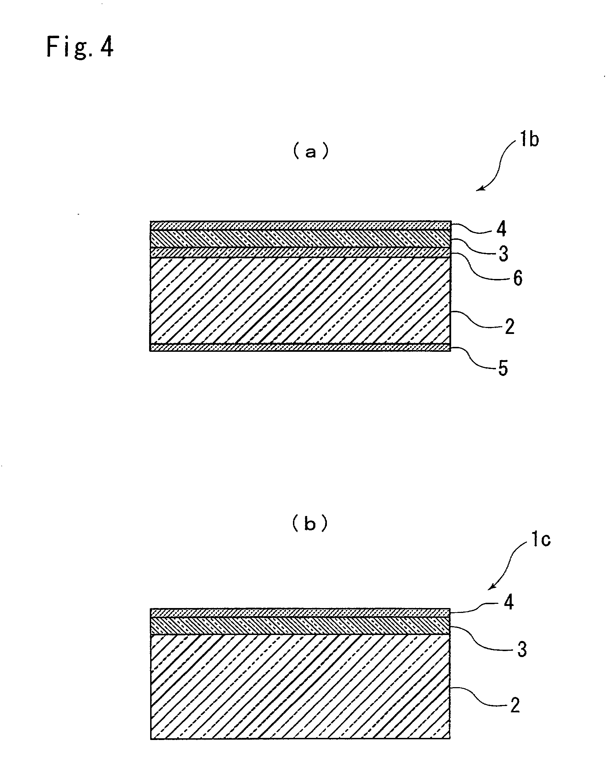

Fig. 4 shows in section the structure of the cover glass as the second and third embodiments of the present invention.

Fig. 4(a) is a sectional view of the cover glass 1b as the second embodiment. The cover glass 1b is composed of a cover glass substrate 2 of transparent plastics, a primer layer 6 on the outer surface of the cover glass substrate 2, a hard coating layer 3 on the surface of the primer layer 6, an outer anti-reflection coating 4 on the surface of the hard coating layer 3, and an inner anti-reflection coating 5 (which is in direct contact with the inner surface of the cover glass substrate 2). The primer layer 6 interposed between the cover glass substrate 2 and the hard coating film 3 differentiates the second embodiment from the first one.

The cover glass 1b of the second embodiment is characterized in that the primer layer 6 improves adhesion of the hard coating film 3 and the anti-reflection coating 4 to the cover glass substrate 2 of transparent plastics, thereby improving the shock resistance of the cover glass 1.

The primer layer 6 should preferably be made of polyurethane resin by coating from a two-pack composition composed of an active hydrogen-containing compound and a polyfunctional isocyanate compound or from an aqueous dispersion of polyurethane resin.

The active hydrogen-containing compound may be exemplified by acryl polyol, (poly)alkylene glycol, and poly(alkylene adipate).

Acryl polyol is an acrylic copolymer resin which is formed from an acrylic monomer having hydroxyl groups and a monomer copolymerizable with the acrylic monomer.

The acrylic monomer having hydroxyl groups as a raw material of the acryl polyol is exemplified by 2-hydroxyethyl acrylate, 3-chloro-2-hydroxybutyl acrylate, 2-hydroxybutyl acrylate, 6-hydroxyhexyl acrylate, 2-hydroxyethyl methacrylate, 2-hydroxypropyl methacrylate, 6-hydroxyhexyl methacrylate, and 5,6-dihydroxyhexyl methacrylate. They may be used alone or in combination with one another.

The monomer copolymerizable with the acrylic monomer having hydroxyl groups is exemplified by methyl (meth)acrylate, ethyl (meth)acrylate, n-propyl (meth)acrylate, n-butyl (meth)acrylate, isopropyl (meth)acrylate, isobutyl (meth)acrylate, n-amyl (meth)acrylate, n-hexyl (meth)acrylate, isoamyl (meth)-acrylate, trifluoroethyl (meth)acrylate, benzyl (meth)-acrylate, 2-n-butoxyethyl (meth)acrylate, 2-chloroethyl (meth)acrylate, sec-butyl (meth)acrylate, tert-butyl (meth)acrylate, 2-ethylbutyl (meth)acrylate, cinnamyl (meth)acrylate, cyclohexyl (meth)acrylate, cyclopentyl (meth)acrylate, 2-ethoxyethyl (meth)acrylate, furfuryl (meth)acrylate, hexafluoroisopropyl (meth)acrylate, 3-methoxybutyl (meth)acrylate, 2-methoxybutyl (meth)-acrylate, 2-nitro-2-methylpropyl (meth)acrylate, n-octyl (meth)acrylate, 2-ethylhexyl (meth)acrylate, 2-phenoxyethyl (meth)acrylate, 2-phenylethyl (meth)acrylate, phenyl (meth)acrylate, tetrahydrofurfuryl (meth)acrylate, tetrapyranyl (meth)acrylate, acrylic acid, and methacrylic acid. Additional examples include ethylenic monomers such as acrylonitrile, vinyl acetate, vinylpyridine, vinylpyrrolidone, methyl crotonate, maleic anhydride, styrene, and α-methylstyrene. Incidentally, (meth)acrylate means acrylate or methacrylate.

The acryl polyol can be obtained from the acrylic monomer having hydroxyl groups and the monomer copolymerizable therewith by any known process such as bulk polymerization, solution polymerization, and emulsion polymerization.

The (poly)alkylene glycol is exemplified by ethylene glycol, propylene glycol, butanediol, polyethylene glycol, and polypropylene glycol.

The poly(alkylene adipate) is exemplified by poly(diethylene adipate) and poly(hexamethylene adipate).

The polyfunctional isocyanate compound includes aliphatic diisocyanates and alicyclic diisocyanates, such as isophorone diisocyanate, dicyclohexylmethane diisocyanate, norbornane diisocyanate, and hexamethylene diisocyanate, which are desirable for weather resistance.

The two-pack primer composition is prepared from an active hydrogen-containing compound and a polyfunctional isocyanate compound by dissolving in an aprotic solvent.

The hydrophilic polyurethane resin is produced as follows. Acryl polyol (and optional other polyols), a compound having carboxyl groups and at least two active hydrogens, and a polyfunctional isocyanate compound are reacted together in the presence of a catalyst in an organic solvent. The polyfunctional isocyanate compound is used in a stoichiometrically excess amount for the active hydrogen. This reaction gives an acryl-modified urethane prepolymer having carboxyl groups and terminal isocyanate groups. This reaction product is neutralized and the resulting hydrophilic urethane prepolymer is dispersed in water. The prepolymer is reacted with a chain extender to increase its molecular weight. In this way there is obtained a self-emulsifiable hydrophilic acryl-urethane copolymer composition.

There is an alternative process which does not employ the compound having carboxyl groups and at least two active hydrogens. This process consists of reacting acryl polyol (and optional other polyols) with a polyfunctional isocyanate compound in the presence of a catalyst in an organic solvent to give an acryl-modified urethane prepolymer having terminal isocyanate groups. The polyfunctional isocyanate compound is used in a stoichiometrically excess amount for the active hydrogen. This urethane prepolymer is dispersed in water with the aid of an emulsifier. The prepolymer is reacted with a chain extender to increase its molecular weight. In this way there is obtained an emulsifiable hydrophilic acryl-urethane copolymer composition.

There is another process of producing the hydrophilic polyurethane resin as follows. This process consists of reacting acryl polyol containing the above-mentioned compound having carboxyl groups and at least two active hydrogens with a polyfunctional isocyanate compound, with the equivalence ratio of isocyanate groups to active hydrogens being from 0.8/1 to 1.2/1. The reaction product is treated with a neutralizer to neutralize the carboxyl groups. The thus obtained polyurethane is finally dispersed in water.

There is a process of producing a composite emulsion of acryl polyol and hydrophilic polyurethane resin by emulsion polymerization of acryl monomer in the presence of a hydrophilic polyurethane resin. The reaction product is a composite of core-shell structure consisting of acryl polyol and hydrophilic polyurethane resin. This process consists of reacting a polyol containing the above-mentioned compound having carboxyl groups and at least two active hydrogens with a polyfunctional isocyanate compound, with the equivalence ratio of isocyanate groups to active hydrogens being from 0.8/1 to 1.2/1. The reaction product is treated with a neutralizer to neutralize the carboxyl groups. The thus obtained polyurethane is dispersed in water. The resulting aqueous dispersion is mixed with acryl monomer and polymerization is carried out with the aid of an initiator. In this way there is obtained an aqueous polyurethane resin of core-shell structure.

Other polyols than acryl polyol include, for example, polyester polyol, polycarbonate polyol, and polyether polyol. They may be used alone or in combination with one another.

The compound having in the molecule carboxyl groups and at least two active hydrogens is exemplified by 2,2-dimethylolpropionic acid, 2,2-dimethylolbutyric acid, 2,2-dimethylolvaleric acid, dioxymaleic acid, and 2,2-dimethylolbutanoic acid.

The compound having carboxyl groups and at least two active hydrogens should be used in such an amount that the content of carboxyl groups in the resin is 0.3-5 wt%, preferably 0.5-1.5 wt%.

The above-mentioned catalyst is exemplified by dibutyltin dilaurate, stannous octoate, dibutyltin-2-ethylhexoate, triethylamine, triethylenediamine, and N-methylmorpholine. They may be used alone or in combination with one another.

The neutralizer is exemplified by amines (such as trimethylamine, triethylamine, tri-n-propylamine, tributylamine, and triethanolamine), potassium hydroxide, sodium hydroxide, and ammonia.

The chain extender is exemplified by low-molecular weight polyfunctional alcohols (such as ethylene glycol, 1,4-butanediol, 1,6-hexanediol, trimethylolpropane, pentaerythritol, and sorbitol), and low-molecular weight polyamines (such as ethylenediamine, propylenediamine, hexamethylenediamine, diaminocyclohexylmethane, piperazine, 2-methylpiperazine, isophoronediamine, diethylenetriamine, and triethylenetetramine. They may be used alone or in combination with one another.

The cover glass 1b (in the second embodiment) shown in Fig. 4(a) has the same structure as that in the first embodiment except for the primer layer 6. Therefore, its explanation is omitted.

Fig. 4(b) is a sectional view of the cover glass 1c in the third embodiment. It consists of a cover glass substrate 2, a hard coating film 3 on the outer surface of the cover glass substrate 2, and an anti-reflection coating 4 on the surface of the hard coating layer 3. It has no anti-reflection coating on the inner surface of the cover glass substrate 2. Therefore, it is economical compared with the cover glass 1 in the first embodiment.

The cover glass 1c is slightly inferior in light transmittance to the cover glass 1 in the first embodiment because it has no anti-reflection coating on its inner surface. Nevertheless, it provides good display visibility without flickering or reflection on account of the anti-reflection coating 4 on the outer surface.

The foregoing explanation is concerned with the cover glass which is constructed such that the anti-reflection coating is formed directly on the cover glass substrate 2 or the hard coating film 3. An economical way to form the anti-reflection coating is to use a preformed film having an anti-reflection coating suitable for mass production.

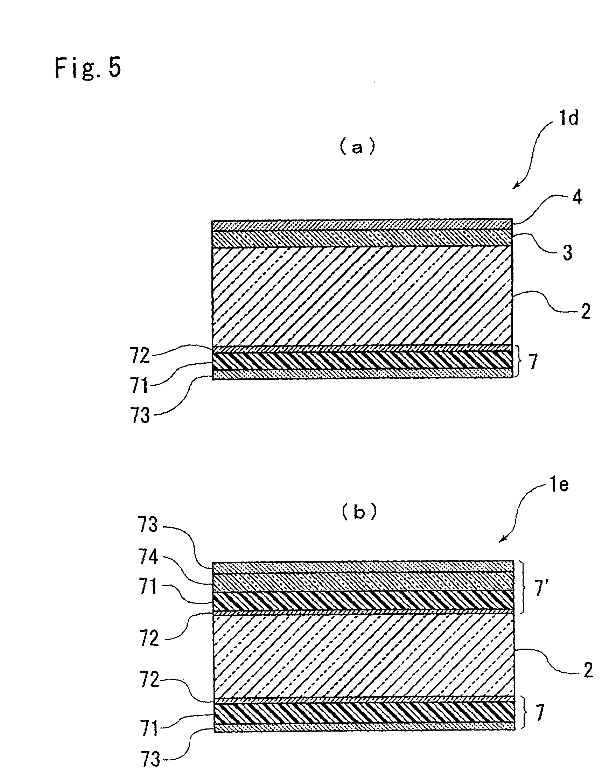

Fig. 5 is a sectional view showing the structure of the cover glass with a preformed film having an anti-reflection coating. Fig. 5(a) shows the cover glass in the fourth embodiment, and Fig. 5(b) shows the cover glass in the fifth embodiment.

The cover glass 1d (in the fourth embodiment) shown in Fig. 5(a) consists of a cover glass substrate 2, a hard coating film 3 formed on the outer surface of the cover glass substrate 2, and an anti-reflection coating 4 formed on the hard coating film 3. It also has a preformed film having an anti-reflection coating 7 which is stuck to the inner surface of the cover glass substrate 2. It has the same structure as that of the cover glass in the first embodiment except that the inner anti-reflection coating 5 is replaced by the preformed film having an anti-reflection coating 7.

The preformed film having an anti-reflection coating 7 consists of a film base 71, an adhesive layer 72 on one side of the film base 71, and an anti-reflection coating 73 on the other side of the film base 71. It is stuck to the inner surface of the cover glass substrate 2 by means of the adhesive layer 72. In other words, the anti-reflection coating 73 is attached to the cover glass substrate 2 through the film base 71 of the preformed film having an anti-reflection coating 7.

The preformed film having an anti-reflection coating 7 is comparatively rigid and hence is poor in flexibility; therefore, it is hard to be stuck to a curved surface and its use is limited to a flat surface or a cylindrical surface in this stage.

In the case where the cover glass substrate 2 has a curved outer surface, it is difficult to stick the preformed film having an anti-reflection coating 7 to the curved outer surface. In order to avoid this difficulty it is desirable to stick the preformed film having an anti-reflection coating 7 to the inner surface of the cover glass substrate 2 which is flat or nearly flat and to form the anti-reflection coating 4 on the outer surface of the cover glass substrate 2 by vacuum deposition. The structure completed in this manner is shown in Fig. 5(a).

The film base 71 of the preformed film having an anti-reflection coating 7 may be transparent film of polyester, polyethylene terephthalate (PET), polybutylene terephthalate, polymethyl methacrylate (PMMA), acryl, polycarbonate, polystyrene, triacetate, polyvinyl alcohol, polyvinyl chloride, polyvinylidene chloride, polyethylene, ethylene-vinyl acetate copolymer, polyurethane, cellophane, or the like. The film base 71 is usually 1-100 µm thick.

The anti-reflection coating 73 on the film base 71 may be of single-layer structure or multi-layer structure of organic or inorganic film. In the case of multi-layer structure, it is desirable to laminate a film of high refractive index and a film of low refractive index alternately, the former being in contact with the film base 71.

The film of high refractive index may be formed from ITO (indium tin oxide), ZnO, Al-doped ZnO, TiO₂, SnO₂, or ZrO.

The film of low refractive index may be an inorganic film of SiO₂, MgF₂, Al₂O₃, or the like or an organic film of FFP (tetrafluoroethylene-hexafluoropropylene copolymer), PTFE (polytetrafluoroethylene), ETFE (ethylene-tetrafluoroethylene copolymer), or the like.

The anti-reflection coating 73 may be formed on the film base 71 by dry process (such as sputtering, ion plating, and CVD) or by wet process (such as coating with an organic solution). The film base 71 may be in the form of flat sheet or roll.

The preformed film having an anti-reflection coating is commercially available. An example is "ARCTOP" (from Asahi Glass Co., Ltd.) which has a single layer ("PF10") or double layers ("PF03") of fluoroplastic resin for the anti-reflection coating 73. Another example is "AR-PET75" (from Sumitomo Chemical Co., Ltd.) which has an anti-reflection coating 73 formed by vacuum deposition.

The preformed film having an anti-reflection coating 7 is advantageous in productivity and production cost over the anti-reflection coating formed directly on the cover glass, because it can be fabricated efficiently. Moreover, the preformed film having an anti-reflection coating 7 permits the hard coating film to be previously formed thereon economically or the water- and oil-repellent treatment to be previously performed thereon economically. In addition, the preformed film having an anti-reflection coating 7 can be stuck to the cover glass substrate 2 efficiently by an automatic machine. Thus it is possible to reduce production cost by sticking the preformed film having an anti-reflection coating 7 rather than forming an anti-reflection coating directly on the inner surface of the cover glass 1. The preformed film having an anti-reflection coating 7 stuck to the inner surface of the cover glass substrate 2 poses no problems with its external appearance. This obviates or simplifies the edge finishing of the preformed film having an anti-reflection coating 7.

Fig. 5(b) shows the cover glass le in the fifth embodiment. The cover glass substrate 2 has a flat or cylindrical outer surface, so that it has the preformed film having an anti-reflection coatings 7 and 7' stuck to both its outer surface and its inner surface. Each of the preformed film having an anti-reflection coatings 7 and 7' has an adhesive layer 72 on one side of the film base 71 and an anti-reflection coating 73 on other side of the film base 71. The preformed film having an anti-reflection coating 7' on the outer surface is constructed such that a hard coating film 74 (to impart scratch resistance) is interposed between the film base 71 and the anti-reflection coating 73. This hard coating film 74 may be omitted as shown in Example.

The film base 71 for the preformed film having an anti-reflection coating 7' on the outer surface should preferably be made of a hard material to ensure good scratch resistance.

If the preformed film having an anti-reflection coating 7' is to be stuck to the outer surface, there may be an instance which requires it to conceal the peripheral edge of the cover glass 1e or to have its edge neatly finished.

The cover glass of portable apparatus as shown in Fig. 1 usually has a decorative part 11 with characters or fringes. In the case of the cover glass according to the present invention which is constructed such that the preformed film having an anti-reflection coating 7 is stuck, it is possible to omit the additional step of making the decorative part if the preformed film having an anti-reflection coating 7 is previously provided with the decorative part 11. Thus it is possible to produce economically the cover glass having the antireflecting performance and the decorative part 11.

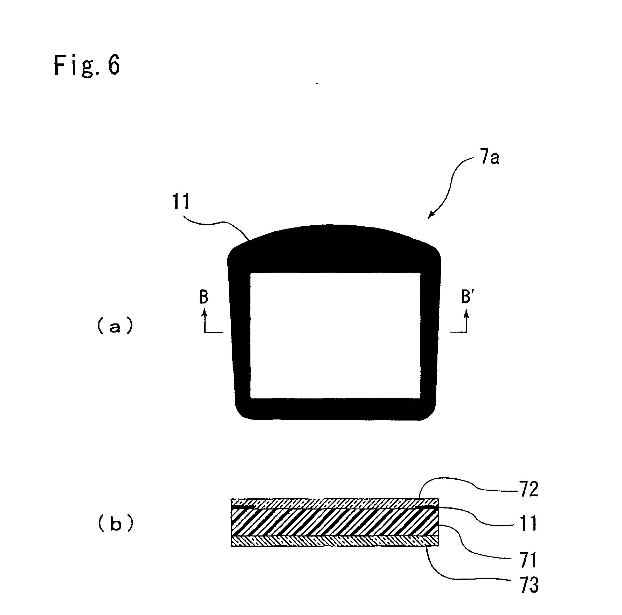

Fig. 6 shows an example of the preformed film having an anti-reflection coating and a decorative part. Fig. 6(a) is a plan view and Fig. 6(b) is a sectional view taken along the line B-B'. As shown in Fig. 6(a), the preformed film having an anti-reflection coating 7a has a decorative part 11 formed on its periphery. As shown in Fig. 6(b), the film base 71 has a decorative part 11 formed on its one side by printing or the like. The decorative part 11 is covered with an adhesion layer 72. On the other side of the film base 71 is an anti-reflection coating 73. A hard coating film may optionally be interposed between the film base 71 and the anti-reflection coating 73.

An explanation is given below of the process of producing the cover glass according to the present invention which has a preformed film having an anti-reflection coating stuck thereto. The preformed film having an anti-reflection coating 7 (or 7') is shipped, with its surfaces covered with a protective film (on the side of the anti-reflection coating 73) and a release film (on the side of the adhesive layer 72). The preformed film having an anti-reflection coating with the protective film protects itself from scratches and stains when the curved surface undergoes vapor deposition for antireflecting treatment after it has been stuck to the cover glass substrate. However, if vapor deposition involves heating and the preformed film having an anti-reflection coating is susceptible to heating, then it is necessary to carry out the heating step before the preformed film having an anti-reflection coating is stuck. When an anti-reflection coating is formed on the cover glass substrate 2, pretreatment (such as acid washing and alkali washing) is performed on the surface. In this case, it is desirable to stick the preformed film having an anti-reflection coating after the anti-reflection coating has been formed. The protective film on the preformed film having an anti-reflection coating should be left unremoved during transportation and storage until the cover glass is finally mounted on the portable apparatus.

The cover glass 1d shown in Fig. 5(a) is produced in the following manner. First, the cover glass substrate 2 having an uncured hard coating film (on its outer surface) is formed by the inmolding transfer. The cover glass substrate 2 is subsequently irradiated with UV light to obtain the hard coating film 3 (which is cured). Then, the preformed film having an anti-reflection coating, with its release film peeled off, is stuck to the inside of the cover glass substrate 2. With the protective film (not shown) left stuck to the preformed film having an anti-reflection coating 7, the anti-reflection coating 4 is formed by vacuum deposition. Finally, the anti-reflection coating 4 is given water-and oil- repellent treatment. In this way there is obtained the cover glass 1d.

The cover glass le shown in Fig. 5(b) is produced in the following manner. First, the cover glass substrate 2 is formed by the ordinary molding method. Subsequently, the cover glass substrate 2 undergoes surface treatment according to need. The preformed film having an anti-reflection coating 7' (which has the hard coating film 74) is stuck to the outer surface of the cover glass substrate 2. Finally, the preformed film having an anti-reflection coating 7 is stuck to the inner surface of the cover glass substrate 2. In this way there is obtained the desired cover glass le.

### <Example 1>

A cover glass substrate having a hard coating film transferred to its outer surface was injection-molded from acrylic resin (PMMA) by the inmolding transfer, which employed a mold in which was placed a resin film having a UV-curable organic hard coating film coated thereon. With the resin film peeled off, the hard coating film is cured by irradiation with UV light.

The thus obtained cover glass substrate with a hard coating film underwent vacuum deposition to form the anti-reflection coating on both sides thereof. The anti-reflection coating is composed of a ZrO₂ layer (in contact with the substrate), an SiO₂ layer, a ZrO₂ layer, and an SiO₂ layer. The first and second layers have a total optical thickness of λ/4 and the third and fourth layers each has an optical thickness of λ/4 (where λ= 520 nm).

The cover glass substrate underwent water- and oil-repellent treatment with 2-(perfluorooctyl)ethyltriaminosilane by vacuum deposition.

### <Example 2>

A cover glass substrate was formed from acrylic resin (PMMA) by ordinary injection molding. It was then dipped in a solution of "Diabeam UK-6074" from Mitsubishi Rayon Co., Ltd. After pulling out from the solution, the cover glass substrate was irradiated with UV light so as to form an acryl-based hard coating film. The cover glass substrate underwent vacuum deposition (to form the anti-reflection coating) and water- and oil- repellent treatment in the same way as in Example 1.

### <Example 3>

A cover glass substrate was prepared in the same way as in Example 2, except that the hard coating film was formed from a silicone-based solution "UVHC 8553" from Toshiba Silicone Co., Ltd. The cover glass substrate finally underwent surface treatment.

### <Example 4>

A cover glass substrate was prepared from acrylic resin (PMMA) by ordinary injection molding. It was coated (by spin coating) with a solution containing a silane compound and metal oxide particles dispersed therein. The silane compound has polymerizable groups and hydrolyzable groups. Coating was followed by baking at 125°C for 30 minutes. The coating solution was prepared as follows.

A reactor equipped with a stirrer was charged with 300 g of 2-ethoxyethanol, 470 g of colloidal silica dispersed in 2-methoxyethanol ("Oscal 1832" from Shokubai Kasei Kogyo Co., Ltd.), 185 g of α-glycidoxypropyltrimethoxysilane, 0.03 g of flow controlling agent, and 50 g of aqueous solution of 0.05N hydrochloric acid. The reactants were stirred at room temperature for 2 hours.

The coated cover glass substrate underwent vacuum deposition (to form the anti-reflection coating) and water- and oil- repellent treatment in the same way as in Example 1.

### <Example 5>

A cover glass substrate was prepared from acrylic resin (PMMA) by ordinary injection molding. The cover glass substrate, without hard coating film, underwent vacuum deposition (to form the anti-reflection coating) and water- and oil-repellent treatment in the same way as in Example 1.

### Comparative Example 1>

A cover glass substrate having a hard coating film transferred to its outer surface was injection-molded from acrylic resin (PMMA) by the inmolding transfer, which employed a mold in which was placed a resin film having a UV-curable organic hard coating film coated thereon. With the resin film peeled off, the hard coating film was cured by irradiation with UV light. The thus obtained cover glass with a hard coating film did not undergo vacuum deposition to form the anti-reflection coating and water- and oil-repellent treatment.

The samples of cover glass obtained in Examples 1 to 5 and Comparative Example 1 were tested in the following manner. The results are shown in Table 1.

### (a) Wear resistance:

The surface of each sample was rubbed with steel wool ("Bonstar #0000" made by Nippon Steel Wool Co., Ltd.) back and forth 10 times under a load of 1 kg. The rubbed surface was visually examined for scratches and rated according to the following criterion.
A : no scratches at all in an area of 1 cm × 3 cm
B : 1 ~ 10 scratches in the same area as above
C : 11 ~ 100 scratches in the same area as above
D : more than 101 scratches in the same area as above

### (b) Adhesion:

Cross-cut tape test according to JIS D-0202.
Samples without peeling are regarded as good.

### (c) Spectral reflectance:

Samples were tested for average reflectance in visible region by using a spectrophotometer ("U-3500" made by Hitachi Ltd.)

**Table 1**

| | Wear resistance | Adhesion | Spectral reflectance |
|---|---|---|---|
| Example 1 | A | Good | 0.5% |
| Example 2 | A | Good | 0.5% |
| Example 3 | A | Good | 0.5% |
| Example 4 | A | Good | 0.5% |
| Example 5 | C | Coating peeled | 0.5% |
| Comparative Example 1 | A | Good | 4.0% |

It is noted from Table 1 that the sample in Comparative Example 1, which has no anti-reflection coating, gave a reflectance as high as 4.0%. This means that the cover glass has a high degree of reflectance and hence is poor in light transmittance. By contrast, the samples in Examples 1 to 5, which have anti-reflection coating on both surfaces, gave a reflectance of 0.5%, which is one-eighth of that in Comparative Example 1. It is also noted that the samples in Examples 1 to 4, which have a hard coating film between the cover glass substrate and the outer anti-reflection coating, are better in wear resistance and adhesion than the sample in Example 5, which has no hard coating film.

### <Example 6>

A cover glass substrate having a hard coating film transferred to its outer surface was injection-molded from acrylic resin (PMMA) by the inmolding transfer, which employed a mold in which was placed a resin film having a UV-curable organic hard coating film coated thereon. The cover glass substrate is similar to a plano-convex lens, having a flat inner surface and a spherical outer surface. With the resin film peeled off, the hard coating film was cured by irradiation with UV light.

To the inner surface of the cover glass substrate was stuck a commercial preformed film having an anti-reflection coating ("AR-PET75" from Sumitomo Chemical Co., Ltd.) which had been cut to a size slightly larger than the cover glass substrate. The margin protruding from the edge of the cover glass substrate was cut off.

The thus obtained cover glass with a hard coating film underwent vacuum deposition to form the anti-reflection coating on the outer surface thereof. The anti-reflection coating is composed of a ZrO₂ layer (in contact with the substrate), an SiO₂ layer, a ZrO₂ layer, and an SiO₂ layer. The first and second layers have a total optical thickness of λ/4 and the third and fourth layers each has an optical thickness of λ/4 (where λ = 520 nm).

The cover glass substrate underwent water- and oil-repellent treatment with 2-(perfluorooctyl)ethyltriaminosilane by vacuum deposition.

Thus there was obtained a cover glass having an antireflection film formed on the outer surface thereof and a preformed film having an anti-reflection coating stuck to the inner surface thereof. This cover glass was found to have a luminous transmittance factor of 98.5%.

### <Example 7>

A semicylindrical cover glass substrate having a cylindrical outer surface and a flat inner surface was formed from acrylic resin (PMMA) by injection molding. To the inner surface and outer surface of the cover glass substrate was stuck a commercial preformed film having an anti-reflection coating ("ARCTOP PFO3" from Asahi Glass Co., Ltd.) which had been cut to a size slightly larger than the cover glass substrate. The margin protruding from the edge of the cover glass substrate was cut off.

Thus there was obtained a cover glass having preformed antireflection films stuck to both the inner surface and the outer surface thereof. This cover glass was found to have a luminous transmittance factor of 98.5%.

### <Example 8>

A flat cover glass substrate was formed from acrylic resin (PMMA) by injection molding. To the both sides thereof was stuck the same commercial preformed film having an anti-reflection coating as used in Example 7.

Thus there was obtained a cover glass having preformed antireflection films stuck to both the inner surface and the outer surface thereof. This cover glass was found to have a luminous transmittance factor of 98.5%.

### <Comparative Example 2>

As in Example 6, a cover glass substrate having a organic hard coating film transferred to its outer surface was injection molded from acrylic resin (PMMA) by the inmolding transfer, which employed a mold in which was placed a resin film having a UV-curable organic hard coating film coated thereon. The cover glass substrate is similar to a plano-convex lens, having a flat inner surface and a spherical outer surface. With the resin film peeled off, the hard coating film was cured by irradiation with UV light. The thus obtained cover glass with a hard coating film did not undergo vacuum deposition to form the anti-reflection coating and water-repellent treatment. The resulting cover glass was found to have a luminous transmittance factor of 92%.

Each of the samples of cover glass obtained in Examples 1 to 8 and Comparative Examples 1 and 2 was mounted on a display unit. It was found that the samples in Examples were superior in display brightness and visibility with less flickering to the samples in Comparative Examples.

As mentioned above, the cover glass of the present invention reduces reflection of external light, increases light transmittance, and improves the visibility of the display unit of portable apparatus.

### Exploitation in Industry

According to the present invention, it is possible to improve the optical properties of the cover glass to be fixed to the window of a housing of a portable apparatus which makes visible the inside of the housing therethrough. The cover glass contributes to the good visibility of the liquid crystal display unit.

### Explanation of Letters or Numerals

- 1: Cover glass
- 11: Decorative part
- 12: Outer surface
- 13: Inner surface
- 2: Cover glass substrate
- 3: Hard coating film
- 4: Anti-reflection coating (on outer surface)
- 5: Anti-reflection coating (on inner surface)
- 6: Primer layer
- 7: Preformed film having an anti-reflection coating
- 71: Film base
- 72: Adhesive layer
- 73: Anti-reflection coating
- 74: Hard coating film
- 20: Housing
- 21: Window
- 22: Frame
- 23: Gap
- 30: Liquid crystal display unit
- 31: View plane
- 100: Cellular phone

## Claims

1. A cover glass to be fixed to the window of a housing of a portable apparatus which makes visible the inside of the housing therethrough, wherein the cover glass comprises a transparent cover glass substrate and an anti-reflection coating formed on the outer surface of the cover glass substrate or on both the outer surface and the inner surface of the cover glass substrate.

2. The cover glass as defined in Claim 1, wherein the anti-reflection coating is formed on the cover glass substrate with a film base of preformed film having an anti-reflection coating interposed between them.

3. The cover glass as defined in Claim 1, wherein a hard coating film is interposed between the cover glass substrate and the anti-reflection coating.

4. The cover glass as defined in Claim 3, wherein the anti-reflection coating is formed on the outer surface of the cover glass substrate with the hard coating film interposed between them, and the anti-reflection coating is formed on the inner surface of the cover glass substrate without the hard coating film interposed between them.

5. The cover glass as defined in Claim 4, wherein the anti-reflection coating on the inner surface of the cover glass substrate is formed on the cover glass substrate with a film base of preformed film having an anti-reflection coating interposed between them.

6. The cover glass as defined in Claim 3, wherein the hard coating film is an organic thin film transferred from a transfer foil.

7. The cover glass as defined in Claim 3, wherein the hard coating film is formed by coating and curing from a coating composition composed mainly of the following components (A) and (B).
(A) Fine particles (1-100 mµm in particle diameter) of oxides of one or more than one kind of metal selected from Si, Sn, Sb, Ce, Zr, and Ti, and/or composite fine particles of oxides of more than one kind of metal selected from Si, Al, Sn, Sb, Ta, Ce, La, Fe, Zn, W, Zr, In, and Ti.
(B) A silane compound having polymerizable groups and hydrolyzable groups.

8. The cover glass as defined in Claim 2, wherein the preformed film having an anti-reflection coating has a decorative part.

9. The cover glass as defined in Claim 3, wherein a primer layer is interposed between the cover glass substrate and the hard coating film.

10. The cover glass as defined in Claim 1, wherein the surface of the anti-reflection coating on the outer surface of the cover glass substrate undergoes water- and oil-repellent treatment.

11. The cover glass as defined in Claim 1, which is used to cover the view plane of a liquid crystal display placed in a housing of a portable apparatus and to make visible the view plane of the display unit.
